# EUROPÄISCHE PATENTSCHRIFT

(11) **EP 1 997 549 B1**
(45) Veröffentlichungstag und Bekanntmachung des Hinweises auf die Patenterteilung: **15.09.2010**
(21) Anmeldenummer: 08009420.4
(22) Anmeldetag: 21.05.2008
(51) Int. Cl.: B01D 53/04, B01D 53/94

(54) **Verfahren und Vorrichtung zur katalytischen Reinigung von biogenen oder anthropogenen methanhaltigen Gasen**
Device and method for catalytic purification of biogenic or anthropogenic gases containing methane
Procédé et dispositif de nettoyage catalytique de gaz biogènes ou anthropogènes contenant du méthane

(30) Priorität: 22.05.2007 DE 102007023668
(43) Veröffentlichungstag der Anmeldung: 03.12.2008
(73) Patentinhaber: Fraunhofer-Gesellschaft zur Förderung der angewandten Forschung e.V., 80686 München (DE)
(72) Erfinder: Urban, Wolfgang, 45896 Gelsenkirchen (DE); Unger, Christoph, 46485 Wesel (DE); Lohmann, Heiko, 44803 Bochum (DE)
(74) Vertreter: Pfenning, Meinig & Partner GbR

(56) Entgegenhaltungen:
- US-A- 5 208 204
- US-B1- 6 207 120

## Beschreibung

Die Erfindung betrifft ein Verfahren und eine Vorrichtung zur katalytischen Reinigung von biogenen oder anthropogenen methanhaltigen Gasen, insbesondere Deponiegasen. Die Erfindung basiert darauf, dass zunächst das Gas aufgeheizt wird und anschließend einer kombinierten katalytischen Oxidation und Hydrolyse unterzogen wird, wodurch die im Gas enthaltenden Minorkomponenten zu Kohlendioxid, Wasser und sauren Reaktionsprodukten abgebaut und anschließend abgetrennt werden.

Bei der energetischen Nutzung biogener oder anthropogener methanhaltiger Gase, wie Biogas, Klärgas oder Deponiegas verursachen die in diesen Gasen enthaltenen Spurenkomponenten vielfältige technische Probleme, die gelöst werden müssen. Besonders hervorzuheben sind hier siliziumorganische Verunreinigungen im Spurenbereich, die mit steigender Tendenz in allen vorgenannten Gasen auftreten und in besonderem Maße die energetische Nutzung der methanhaltigen Gase - z.B. durch sandartige Ablagerungen in Motoren - erschweren. In Klärwerken und Deponien mit hoher Belastung mit Siliziumorganika (Siloxane) mussten deshalb in der Vergangenheit hohe Wartungskosten von Motoren toleriert oder sogar ganz auf die Verwertung des Methans verzichtet werden.

Brennstoffzellen stellen im Vergleich zu Motoren und Turbinen noch deutlich höhere Anforderungen an das Brenngas. Es ist in diesen Fällen nicht ausreichend das Sondergas nur auf wenige ppmv zu entschwefeln und die Siliziumorganika abzutrennen. Vielmehr müssen alle Spurenkomponenten bis auf 100 ppbv und besonders auch halogenierte Kohlenwasserstoffe aus dem Gasstrom abgetrennt werden. Daher ist eine vorhergehende Gasaufbereitung biogener Gase vor der energetischen Nutzung unvermeidbar.

Aufgrund der Vielfalt der im Deponiegas vorkommenden Spurenverbindungen (es wurden bisher in Deponiegasen über 300 verschiedene Schadstoffe detektiert) und deren unterschiedlichen Quantitäten (Schadstoffe wie Siloxane im unteren ppm-Bereich, Aromaten oder Schwefelwasserstoff bis 0,1 Vol.-%) scheint kein bisher erprobtes Verfahren dazu geeignet zu sein, die Forderungen nach Wirtschaftlichkeit, Betriebssicherheit und Erfüllung der hohen Reinheitsanforderungen von Brennstoffzellen und hinsichtlich der Forderung nach einem einfachen flexiblen Verfahren zu erfüllen. Weitere Anforderungen an einen optimalen Gasaufbereitungsprozess sind seine Flexibilität gegenüber tages- bzw. jahreszeitlichen Schwankungen in der Gaszusammensetzung und die Möglichkeit eines kontinuierlich arbeitenden Prozesses.

Stand der Technik im Bereich der Reinigung methanhaltiger Gase (Aufbereitung für eine energetische Nutzung in Motoren, Turbinen oder Brennstoffzellen) sind adsorptive Verfahren mit Aktivkohlen und absorptive Verfahren (Gaswäsche mit Sickerwasser, alkalischem Wasser oder modifizierten Heizölen bzw. organischen Lösungsmitteln); wobei adsorptive Verfahren oftmals mit einer vorgelagerten Gaskühlung oder absorptiven Verfahrensschritten gekoppelt werden. Die bisher verwendeten Gasreinigungsverfahren waren hinsichtlich Wirtschaftlichkeit oder Verfügbarkeit nicht erfolgreich. So sind im Wesentlichen drei Probleme nicht gelöst worden:
- zu hohe Betriebskosten durch zu hohen Verbrauch an Adsorbentien (Aktivkohle),
- nicht erreichte Reinigungsleistungen bei absorptiven Wäscheverfahren und
- zu geringe Betriebssicherheit durch hohe Störanfälligkeiten (Gastiefkühlung).

Aktivkohlen sind zur Entfernung von Siliziumorganika oder halogenierten Kohlenwasserstoffen aus biogenen bzw. methanhaltigen Gasen aufgrund ihrer Unselektivität, konkurrierender Adsorption (Vielstoffgemisch) und - sich daraus ergebend - ihrer sehr geringen Adsorptionskapazität nicht oder nur bedingt geeignet. Sie erfüllen zwar die technischen Anforderungen, jedoch nicht die wirtschaftlichen Erwartungen.

Aus der DE 10 2004 051 807 A1 sind Sorbentien zur selektiven Abscheidung von Siliziumorganika aus methanhaltigen Gasströmen bekannt, die aber nicht für eine vollständige Abtrennung aller Schadstoffe aus Deponiegasen geeignet sind und somit keine Gesamtlösung darstellen können. Zwar werden zurzeit adsorptive Gasreinigungsverfahren betriebstechnisch optimiert, indem maßgeschneiderte Filter bzw. Sorbentien (polyamorphe Graphitmaterialien wie Aktivkohlen, Kieselgele, Aluminiumoxide) miteinander kombiniert werden [US2006-0000352A1, US2006-0144224A1, US5059405]. Dies löst allerdings nicht das grundsätzliche Problem, dass das Durchbrechen der Schadstoffe durch die Sorbensschüttungen entweder aufwendig überwacht werden muss oder die Kapazität der Sorbentien nicht ausgenutzt werden können und ein häufiges Wechseln der Adsorberfüllungen notwendig ist.

Absorptive Verfahren verursachen einen hohen apparatetechnischen Aufwand und sind erst bei größeren Volumenströmen anzuwenden. Des Weiteren lösen sich einige Stoffgruppen wie Siloxane oder halogenierte Kohlenwasserstoffe nur sehr schlecht in üblichen Absorptionsmitteln (z.B. Wasser), so dass entweder nur geringe Abscheidegrade erreicht werden oder ein extrem hoher apparativer Aufwand zur Abtrennung aller Minorkomponenten notwendig ist (Schweigkofler, M.; Niessner, R.: Removal of siloxanes in biogases. Journal of Hazardous Materials B83 (2001) 183-196).

Darüber hinaus muss festgestellt werden, dass mit absorptiven Deponiegasreinigungsverfahren allein die Anforderungen an die zu erreichende Gasqualität nicht erreicht werden können. Auch bei diesen Verfahren sind Aktivkohlen nachzuschalten.

Eine erfolgversprechende Lösung stellt die Kombination aus Oxidation und Hydrolyse an einem Katalysator - also die Zusammenfassung aller Schadstoffe zu einer leicht abtrennbaren Schadstoffklasse durch Oxidation und Hydrolyse - und einer nachfolgenden oder simultanen Abtrennung der Abbauprodukte dar.

Reaktionsmittel ist Wasser (Gasfeuchte) und Restsauerstoff, der in der Regel immer als Falschluftanteil aus der Deponiegasabsaugung bzw. aus der Beschickung des Faulbehälters (Klärschlammvergärung) im Gas enthalten ist.

Nachfolgend wird auf den Stand der Forschung näher eingegangen.

Durch gleichzeitig stattfindende Oxidation und Hydrolyse werden die Minorkomponenten, wie beispielsweise chlorierte und fluorierte Kohlenwasserstoffe, Siloxane, Schwefelverbindungen oder Aromaten, zu sauren und damit leicht abtrennbaren Reaktionsprodukten, z.B. HCl, HF oder SO₂, abgebaut.

Aus He, C.; Hermann, D.; Minet, R.G.; Tsotsis, T.T.: A Catalytic/Sorption Hybrid Process for Landfill Gas Clean-Up, Ind. Eng. Chem. Res., 36, 4100, 1997 ist ein Verfahren zur katalytischen Deponiegasreinigung bekannt, bei dem als Reaktionsmittel ausschließlich Wasserstoff benutzt wurde und man daher von einem (De-)hydrierungsprozess sprechen muss. Reaktionsprodukte sind also HCl, HF und H₂S, die ebenfalls leicht abtrennbar sind. Nachteilig an diesem Verfahren ist der Einsatz von teurem Wasserstoff und von empfindlichen (De-)Hydrierkatalysatoren wie Nickel.

In Shafiei, M., Optimized catalyst for steam reforming of chlorinated hydrocarbons, Dissertation, University of Houston, 2002, wird ein Verfahren vorgestellt, das auf dem weit verbreiteten Prinzip der adsorptiven Deponiegasreinigung mit Aktivkohlen basiert, nur dass hier die Aktivkohlen mit Dampf regeneriert und die desorbierten halogenierten Kohlenwasserstoffe und Aromaten danach reformiert und entsorgt werden. Dazu ist zu bemerken, dass sich die Vor-Ort-Regenerierung aus Kostengründen nicht hat durchsetzen können.

In D. Ortego, Jr., J.T. Richardson und M.V. Twogg "Catalytic Steam Reforming of Hydrocarbons: Methyl Chloride, "Appl. Catal. B. Environ. 12 (1997): 339 wurde das Potenzial des Abbaus chlorierter Kohlenwasserstoffe durch Steam Reforming an geträgerten Edelmetallkatalysatoren eingehend untersucht. Nachteilig sind hier hohe Betriebstemperaturen und die Desaktivierung der Edelmetallkatalysatoren durch Schwefel oder Siliziumorganika. Zu Erwähnen ist auch, dass diese Untersuchungen nur für VOC-haltige Abluftströme (VOC - volatile organic compounds, flüchtige organische Verbindungen) und nicht für methanhaltige Gase durchgeführt worden sind.

Im Bereich der Abgas- oder Abluftaufbereitung werden bereits seit einigen Jahren im steigenden Maße katalytische Verfahren zur Oxidation flüchtigen organischen Verbindungen genutzt (EP 0830198B1). Allen gemeinsam ist, dass lediglich Luft (Abluft aus technischen Prozessen oder heiße Abgase) aufbereitet werden muss und Sauerstoff als Reaktionsmittel in genügendem Maße zur Verfügung steht.

Industriell anfallende Abgase enthalten in der Regel nur einzelne - gegebenenfalls halogenierte - Kohlenwasserstoffe (einfache überschaubare Matrix). Deshalb ist es möglich ein breites Spektrum von Oxidationskatalysatoren (sowohl Edelmetalle als Metalloxide) für die Reinigung solcher Abgasströme einzusetzen. Die zu reinigenden Abgasströme sind deutlich größer als typische Deponiegasströme und enthalten zudem höhere Konzentrationen an VOC (oft mehrere tausend ppm), so dass der Einsatz der reaktiveren Edelmetalle wie Platin als Katalysatoren auch wirtschaftlich sinnvoll ist.

Ausgehend hiervon war es Aufgabe der vorliegenden Erfindung, ein Verfahren zur Reinigung von Gasen bereitzustellen, das einerseits einfach und damit kostengünstig zu handhaben ist und gleichzeitig gereinigte Gase mit höchster Reinheit bereitstellt, so dass diese höchste Anforderungen, wie z.B. bei Brennstoffzellen, erfüllen.

Diese Aufgabe wird durch das Verfahren mit den Merkmalen des Anspruchs 1 und die Vorrichtung mit den Merkmalen des Anspruchs 26 gelöst. Die weiteren abhängigen Ansprüche zeigen vorteilhafte Weiterbildungen auf.

Erfindungsgemäß wird ein Verfahren zur katalytischen Reinigung von biogenen oder anthropogenen methanhaltigen Gasen bereitgestellt, bei dem das biogene oder anthropogene methanhaltige Gas auf Temperaturen im Bereich von 200 bis 450 °C aufgeheizt wird. Im aufgeheizten Gas werden anschließend durch kombinierte katalytische Oxidation und Hydrolyse alle enthaltenen Minorkomponenten zu Kohlendioxid, Wasser sowie sauren Reaktionsprodukten abgebaut. Die sauren Reaktionsprodukte werden anschließend aus dem Gasstrom abgetrennt.

Das Verfahren stellt eine deutliche Vereinfachung gegenüber dem Stand der Technik zur Aufbereitung von biogenen bzw. anthropogenen methanhaltigen Gasen auf Brennstoffzellenqualität dar, da nicht mehr mehrere aufwendige Teilschritte sondern nur noch eine Aufheizung des Rohgases - die Wärmebereitstellung erfolgt vorzugsweise durch eine Abwärmeauskopplung - und die nachfolgende Durchströmung durch einen Festbettreaktor notwendig ist.

Mit dem hier vorgeschlagenen Verfahren kann sichergestellt werden, dass alle im Deponiegas enthaltenen Minorkomponenten aus dem Gasstrom wirksam entfernt und zu umweltneutralen Endprodukten (anorganische Salze, z.B. NaCl und Na₂SO₄) abgebaut werden. Damit ist eine zum Vergleich zu Aktivkohlen (thermisch zu entsorgender Sondermüll) oder Wäschern (Abwasserbehandlung) einfache und preiswerte Deponierung möglich. Die Austauschintervalle für die beladenen Sorbentien zur Abscheidung der Sauergas- bzw. Siliziumkomponenten reduzieren sich im Vergleich zu bisherigen adsorptiven Verfahren deutlich.

Die verwendeten Katalysatormaterialien zeichnen sich gegenüber dem Stand der Technik (Abgasreinigung) dadurch aus, dass sie sehr preiswert zur Verfügung gestellt werden können, aufgrund ihrer Vergiftungsresistenz hohe Standzeiten ermöglichen und eine Entsorgung zu geringen Kosten möglich ist.

In der Folge kann davon ausgegangen werden, dass das vorgeschlagene Gasreinigungsverfahren - vorzugsweise für Deponiegas - gegenüber dem Stand der Technik deutlich kostengünstiger dargestellt werden kann.

Erfreulich ist auch, dass mit diesem neuen Gasreinigungsverfahren ökonomischer Mehrwert mit neuen Maßstäben bei der Endreinheit des Gases und beim lokalen und globalen Umweltschutz kombiniert werden können, da die größtenteils sehr treibhauswirksamen Spuren in Sondergasen vollständig eliminiert werden.

Mit einer Kombination aus Oxidation und Hydrolyse an einem Katalysator - also die Zusammenfassung aller Schadstoffe zu einer leicht abtrennbaren Schadstoffklasse durch Oxidation und Hydrolyse - und einer nachfolgenden oder simultanen Abtrennung der Abbauprodukte wird das methanhaltige Gas, vorzugsweise Deponiegas, auf Brennstoffzellenqualität aufbereitet. Das Produktgas enthält nur noch Methan, CO₂ und Wasserdampf.

Reaktionsmittel für die kombinierte Oxidation/Hydrolyse ist Wasser (Gasfeuchte) und Restsauerstoff, der in der Regel immer als Falschluftanteil aus der Deponiegasabsaugung bzw. aus der Beschickung des Faulbehälters (Klärschlammvergärung) im Gas enthalten ist.

Mit einer kombinierten Oxidation/Hydrolyse bei Temperaturen um ca. 200-450 °C werden die Minorkomponenten, wie beispielsweise chlorierte und fluorierte Kohlenwasserstoffe, Siloxane, Schwefelverbindungen oder Aromaten zu sauren (HCl, HF und SO₂) und damit leicht abtrennbaren Gasbestandteilen abgebaut (vergleiche beispielhafte Reaktionsgleichungen). Dieser Verfahrensschritt stellt damit eine wesentliche Vereinfachung des Reinigungsprozesses dar, da nicht mehr völlig verschiedene Schadstoffgruppen mit ungezählten Einzelverbindungen abgetrennt werden müssen.

CCl₂F₂ + 2H₂O ↔ CO₂ + 2HCl + 2HF Hydrolyse

H₂S + ³/₂ O₂ ↔ SO₂ + H₂O Oxidation

C₂Cl₄ + 2H₂O + O₂ ↔ 2 CO₂ + 4 HCl Oxidation/Hydrolyse

Die Reaktionsprodukte HCl, HF und SO₂ werden simultan an einem Sorbensmaterial abgeschieden und dauerhaft eingebunden. Nach einer gewissen Betriebszeit werden sowohl der Katalysator als auch das Sorbensmaterial aus dem Festbettreaktor ausgebaut und deponiert.

Unter Minorkomponenten sind im Rahmen der vorliegenden Erfindung insbesondere Verbindungen bzw. Mischungen von Verbindungen zu verstehen, die typischerweise in Deponiegas vorkommen. Hierzu zählen halogenierte und aromatische Kohlenwasserstoffe (z.B. Tetrachlorethen, Trichlortrifluorethan, Benzol, Ethylbenzol), siliziumorganische Verbindungen (z.B. Hexamethyldisiloxan) sowie schwefelhaltige Verbindungen (z.B. Schwefelwasserstoff, Carbonylsulfid).

Vorzugsweise erfolgt die Aufheizung des Gases mittels revisionierbaren Wärmeüberträgern. Unter revisionierbaren Wärmeüberträgern sind Rohrbündelwärmeüberträger zu verstehen, die dergestalt konstruiert sind, dass die mit dem aufzuheizenden Gas in Berührung kommenden Wärmetauscherflächen leicht zugänglich sind, um eventuell während des Betriebs auftretende Ablagerungen (insbesondere Siliziumdioxidablagerungen) in einfacher Weise entfernen zu können.

Eine bevorzugte Ausführungsform des erfindungsgemäßen Verfahrens sieht vor, dass die sauren Reaktionsprodukte mit einem Sorbens abgetrennt werden. Hierfür kommen insbesondere basische Metalloxide in Frage.

Die kombinierte katalytische Oxidation und Hydrolyse sowie die Abtrennung der sauren Reaktionsprodukte erfolgt bevorzugt in mindestens einem Festbettreaktor. Der Festbettreaktor ist dabei bevorzugt aus drei Zonen aufgebaut.

In einer ersten Zone des Festbettreaktors wird das aufgeheizte Gas mit einem ersten metalloxidischen Katalysator zur Zersetzung siliziumorganischer Verbindungen in Kontakt gebracht. Dabei besteht der erste metalloxidische Katalysator vorzugsweise aus Oxiden der Elemente Aluminium, Titan, Silizium oder aus säureaktivierten Bentoniten bzw. Mischungen der genannten Verbindungen.

In der zweiten Zone wird das aufgeheizte Gas mit einem zweiten metalloxidischen Katalysator zur Zersetzung aromatischer und halogenierter Kohlenwasserstoffe sowie schwefelhaltiger Verbindungen in Kontakt gebracht. Der zweite metalloxidische Katalysator besteht dabei vorzugsweise aus Oxiden der Elemente Vanadium, Titan, Eisen, Mangan, Chrom bzw. aus Mischungen der genannten Verbindungen.

Weiterhin weist der Festbettreaktor mindestens eine dritte Zone auf, in der durch Inkontaktbringen des Gases mit einem basischen Metalloxid eine Abtrennung der sauren Reaktionsprodukte erfolgt. Das basische Metalloxid ist dabei vorzugsweise Aluminiumoxid. Weiterhin kann das basische Metalloxid weitere basische Zusätze enthalten. Hierzu zählen beispielsweise Natrium- und Calciumoxid.

Die kombinierte Oxidation und Hydrolyse erfolgt vorzugsweise in Gegenwart von Wasser und Luftsauerstoff als Reaktionsmitteln. Das Wasser resultiert dabei aus der Gasfeuchte des Gases, während der Sauerstoff als Falschluftanteil im Gas enthalten ist.

Als saure Reaktionsprodukte bilden sich insbesondere Chlor- und Fluorwasserstoff sowie Schwefeldioxid bzw. Mischungen dieser Reaktionsprodukte.

Vorzugsweise wird das Gas auf Temperaturen von 200 bis 450 °C, insbesondere von 250 bis 350 °C aufgeheizt.

Eine weitere bevorzugte Variante des erfindungsgemäßen Verfahrens sieht vor, dass das gereinigte Gas einem Stromerzeuger zugeführt wird. In diesem Fall kann im Stromerzeuger beim Verbrennungsprozess Abgas gebildet werden, dessen Wärme zum Aufheizen des Gases verwendet wird.

Eine andere Variante sieht vor, dass die Aufheizung des Gases durch die bei der Verbrennung eines Teilstroms des Ausgangsgases und/oder des gereinigten Gases gebildete Wärme erfolgt.

Ebenso ist es bevorzugt, dass im Anschluss an die Abtrennung der sauren Reaktionsprodukte eine zusätzliche Staubfilterung des Gases erfolgt.

Erfindungsgemäß wird ebenso eine Vorrichtung zur katalytischen Reinigung von biogenen oder anthropogenen methanhaltigen Gasen bereitgestellt, die mindestens einen Wärmeüberträger zur Aufheizung des biogenen oder anthropogenen methanhaltigen Gases und mindestens einen Festbettreaktor mit mindestens drei Zonen aufweist. In der ersten Zone ist dabei ein erster metalloxidischer Katalysator zur Zersetzung siliziumorganischer Verbindungen angeordnet. Die zweite Zone weist wiederum einen zweiten metalloxidischen Katalysator zur Zersetzung aromatischer und halogenierter Kohlenwasserstoffe sowie schwefelhaltiger Verbindungen auf. In der dritten Zone wiederum ist ein basisches Metalloxid enthalten, das der Sorption saurer Reaktionsprodukte, die in den ersten beiden Zonen gebildet wurden, dient.

Die Vorrichtung zur Gasreinigung besteht vorzugsweise aus einem revisionierbaren Rohrbündel-Wärmeübertrager zur Aufheizung des zu reinigenden Gases und nachfolgend aus einem oder mehreren nachgelagerten Festbettreaktoren. Am Austritt aus dem Reaktor kann vorzugsweise ein Filter zur Feinstaubabscheidung angeordnet sein. Abschließend kann das Produktgas nach Bedarf abgekühlt und einem Stromerzeugungsaggregat zugeführt werden.

Die benötigte Wärme zur Aufheizung des Rohgases wird entweder aus dem Abgasstrom des Stromerzeugers ausgekoppelt oder durch Verbrennung eines Teilstroms des Edukt- bzw. Produktgases (nach der Gasreinigung) zur Verfügung gestellt.

Anhand der nachfolgenden Figur wird das erfindungsgemäße Verfahren näher beschrieben, ohne dieses auf die hier gezeigte spezielle Ausführungsform einschränken zu wollen.

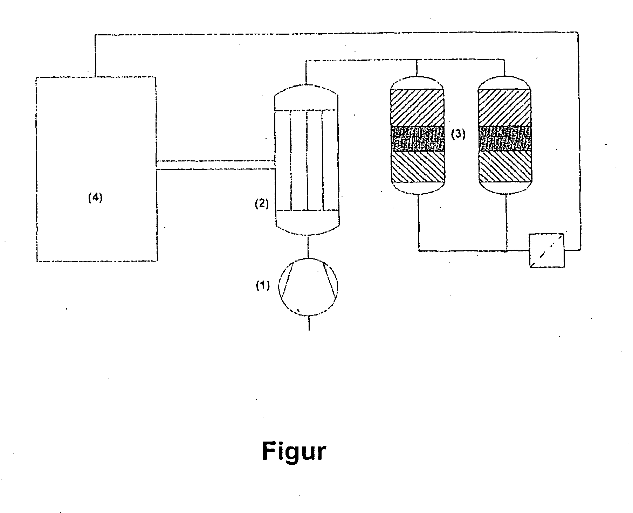

Die Figur zeigt eine beispielhafte schematische Darstellung des Verfahrens. Das Rohgas wird beispielsweise auf einer Deponie abgesaugt 1 und dem Prozess zugeführt. Dabei entstehendes Kondensat wird an einem Abscheider aus dem Gasstrom abgetrennt. Das Rohgas wird danach auf ca. 200-450 °C in einem Rohrbündel-Wärmeübertrager 2 erwärmt. Die dafür benötigte Wärme wird vorzugsweise aus dem Abgasstrom des Stromerzeugers 4 ausgekoppelt. Das erwärmte Gas wird danach einem oder mehreren Festbettreaktoren 3 zugeführt. Dabei werden alle Minorkomponenten hydrolisiert oder oxidiert und die Abbauprodukte an Sorbentien abgeschieden. Das gereinigte Gas wird dann dem Stromerzeuger 4 zugeführt.

## Patentansprüche

1. Verfahren zur katalytischen Reinigung von biogenen oder anthropogenen methanhaltigen Gasen, bei dem das biogene oder anthropogene methanhaltige Gas auf Temperaturen im Bereich von 200 bis 450 °C aufgeheizt wird, das aufgeheizte Gas einer kombinierten katalytischen Oxidation und Hydrolyse unterzogen wird, bei der alle im Gas enthaltenen Minorkomponenten zu Kohlendioxid, Wasser und sauren Reaktionsprodukten abgebaut werden und anschließend die sauren Reaktionsprodukte abgetrennt werden.

2. Verfahren nach Anspruch 1,
**dadurch gekennzeichnet, dass** die Minorkomponenten der Gruppe der halogenierten und aromatischen Kohlenwasserstoffe, der siliziumorganische Verbindungen sowie der schwefelhaltigen Verbindungen angehören.

3. Verfahren nach Anspruch 2,
**dadurch gekennzeichnet, dass** die halogenierten und aromatischen Kohlenwasserstoffe ausgewählt sind aus der Gruppe bestehend aus Tetrachlorethen, Trichlortrifluorethan, Benzol und Ethylbenzol.

4. Verfahren nach Anspruch 2,
**dadurch gekennzeichnet, dass** die Siliziumorganische Verbindung Hexamethyldisiloxan ist.

5. Verfahren nach Anspruch 2,
**dadurch gekennzeichnet, dass** die schwefelhaltige Verbindung Schwefelwasserstoff oder Carbonylsulfid ist.

6. Verfahren nach einem der vorhergehenden Ansprüche,
**dadurch gekennzeichnet, dass** die Aufheizung des Gases mittels revisionierbaren Wärmeüberträgern in Form von Rohrbündelwärmeüberträgern erfolgt.

7. Verfahren nach einem der vorhergehenden Ansprüche,
**dadurch gekennzeichnet, dass** die sauren Reaktionsprodukte mit einem Sorbens aus dem Gasstrom abgetrennt werden.

8. Verfahren nach einem der vorhergehenden Ansprüche,
**dadurch gekennzeichnet, dass** die kombinierte katalytische Oxidation und Hydrolyse und die Abtrennung der sauren Reaktionsprodukte in mindestens einem Festbettreaktor durchgeführt wird.

9. Verfahren nach einem der vorhergehenden Ansprüche,
**dadurch gekennzeichnet, dass** der Festbettreaktor mindestens eine Zone zur Zersetzung siliziumorganischer Verbindungen aufweist, in der das aufgeheizte Gas mit einem ersten metalloxidischen Katalysator in Kontakt gebracht wird.

10. Verfahren nach dem vorhergehenden Anspruch,
**dadurch gekennzeichnet, dass** der erste metalloxidische Katalysator aus Oxiden der Elemente Aluminium, Titan, Silizium sowie aus säureaktivierten Bentoniten oder aus Mischungen der genannten Verbindungen besteht oder diese im wesentlichen enthält.

11. Verfahren nach einem der vorhergehenden Ansprüche,
**dadurch gekennzeichnet, dass** der Festbettreaktor mindestens eine Zone zur Zersetzung aromati-, scher, halogenierter Kohlenwasserstoffe sowie schwefelhaltiger Verbindungen aufweist, in der das aufgeheizte Gas mit einem zweiten metalloxidischen Katalysator in Kontakt gebracht wird.

12. Verfahren nach dem vorhergehenden Anspruch,
**dadurch gekennzeichnet, dass** der zweite metalloxidische Katalysator aus Oxiden der Elemente Vanadium, Titan, Eisen, Mangan, Chrom oder aus Mischungen der genannten Verbindungen besteht oder diese im wesentlichen enthält.

13. Verfahren nach dem vorhergehenden Anspruch,
**dadurch gekennzeichnet, dass** der Festbettreaktor mindestens eine Zone zur Sorption der sauren Reaktionsprodukte aufweist, in der das aufgeheizte Gas mit einem basischen Metalloxid in Kontakt gebracht wird.

14. Verfahren nach dem vorhergehenden Anspruch,
**dadurch gekennzeichnet, dass** das basische Metalloxid Aluminiumoxid ist.

15. Verfahren nach dem vorhergehenden Anspruch,
**dadurch gekennzeichnet, dass** das basische Metalloxid weitere basische Zusätze enthält.

16. Verfahren nach dem vorhergehenden Anspruch,
**dadurch gekennzeichnet, dass** die basischen Zusätze Natrium- und/oder Calciumoxid sind.

17. Verfahren nach einem der vorhergehenden Ansprüche,
**dadurch gekennzeichnet, dass** die kombinierte Oxidation und Hydrolyse in Gegenwart von Wasser und Luftsauerstoff erfolgt, wobei die Gasfeuchte im Gas das Wasser für die Hydrolyse liefert und der Sauerstoff als Falschluftanteil im Gas enthalten ist.

18. Verfahren nach einem der vorhergehenden Ansprüche,
**dadurch gekennzeichnet, dass** neben Kohlendioxid und Wasser als saure Reaktionsprodukte Chlor- und Fluorwasserstoff sowie Schwefeldioxid gebildet werden.

19. Verfahren nach einem der vorhergehenden Ansprüche,
**dadurch gekennzeichnet, dass** das Gas auf Temperaturen von 200 bis 400°C, insbesondere von 250 bis 350 °C aufgeheizt wird.

20. Verfahren nach einem der vorhergehenden Ansprüche,
**dadurch gekennzeichnet, dass** das gereinigte Gas einem Stromerzeuger zugeführt wird.

21. Verfahren nach dem vorhergehenden Anspruch,
**dadurch gekennzeichnet, dass** im Stromerzeuger beim Verbrennungsprozess Abgas gebildet wird, dessen Wärme zum Aufheizen des Gases verwendet werden kann.

22. Verfahren nach einem der vorhergehenden Ansprüche,
**dadurch gekennzeichnet, dass** die Aufheizung des zu reinigenden Gases durch die bei der Verbrennung eines Teilstroms des Ausgangsgases und/oder des gereinigten Gases gebildete Wärme erfolgt.

23. Verfahren nach einem der vorhergehenden Ansprüche,
**dadurch gekennzeichnet, dass** im Anschluss an die Abtrennung der sauren Reaktionsprodukte eine Staubfilterung des Gases erfolgt.

24. Verfahren nach einem der vorhergehenden Ansprüche,
**dadurch gekennzeichnet, dass** das methanhaltige Gas Deponiegas oder Klärgas ist.

25. Verfahren nach einem der vorhergehenden Ansprüche,
**dadurch gekennzeichnet, dass** das gereinigte Gas einem Stromerzeuger, vorzugsweise einer Brennstoffzelle, einer Turbine oder einem Motor, zugeführt wird.

26. Vorrichtung zur katalytischen Reinigung von biogenen oder anthropogenen methanhaltigen Gasen enthaltend mindestens einen Wärmeüberträger zur Aufheizung des biogenen oder anthropogenen methanhaltigen Gases und mindestens einem Fest-bettreaktor mit mindestens drei Zonen, wobei in der ersten Zone ein erster metalloxidischer Katalysator zur Zersetzung siliziumorganischer Verbindungen, in der zweiten Zone ein zweiter metalloxidischer Katalysator zur Zersetzung aromatischer und halogenierter Kohlenwasserstoffe und schwefelhaltiger Verbindungen und in der dritten Zone ein basisches Metalloxid zur Sorption saurer Reaktionsprodukte, die in den ersten beiden Zonen gebildet wurden, angeordnet ist.

27. Vorrichtung nach Anspruch 26,
**dadurch gekennzeichnet, dass** der Wärmeüberträger ein Rohrbündel-Wärmeüberträger ist.

28. Vorrichtung nach einem der Ansprüche 26 oder 27,
**dadurch gekennzeichnet, dass** das Gas über einen Verdichter dem Wärmeüberträger zugeführt wird.

29. Vorrichtung nach einem der Ansprüche 26 bis 28,
**dadurch gekennzeichnet, dass** die Vorrichtung einen Stromerzeuger aufweist, in den das gereinigte Gas eingespeist wird.

30. Vorrichtung nach Anspruch 29,
**dadurch gekennzeichnet, dass** der Stromerzeuger mit dem Wärmeüberträger thermisch gekoppelt ist, so dass die bei der Verbrennung im Stromerzeuger entwickelte Abwärme in den Wärmeüberträger eingekoppelt wird.

31. Vorrichtung nach einem der Ansprüche 26 bis 30,
**dadurch gekennzeichnet, dass** der Stromerzeuger eine Brennstoffzelle, eine Turbine oder ein Gasmotor ist bzw. aus Kombinationen der genannten Stromerzeugern besteht.

32. Vorrichtung nach einem der Ansprüche 26 bis 31,
**dadurch gekennzeichnet, dass** im Anschluss an den Festbettreaktor mindestens ein Staubfilter angeordnet ist.

33. Vorrichtung nach einem der Ansprüche 26 bis 32 zur Durchführung des Verfahrens nach einem der Ansprüche 1 bis 25.

## Claims

1. A method for the catalytic purification of biogenic or anthropogenic methane-containing gases, in which the biogenic or anthropogenic methane-containing gas is heated to temperatures in the range from 200 to 450°C, the heated gas is subjected to combined catalytic oxidation and hydrolysis, in which all the minor constituents contained in the gas are broken down into carbon dioxide, water and acidic reaction products and then the acidic reaction products are separated off.

2. A method according to Claim 1, **characterised in that** the minor constituents belong to the group consisting of halogenated and aromatic hydrocarbons, organo-silicon compounds and sulphur-containing compounds.

3. A method according to Claim 2, **characterised in that** the halogenated and aromatic hydrocarbons are selected from the group consisting of tetrachloroethene, trichlorotrifluoroethane, benzene and ethylbenzene.

4. A method according to Claim 2, **characterised in that** the organo-silicon compound is hexamethyldisiloxane.

5. A method according to Claim 2, **characterised in that** the sulphur-containing compound is hydrogen sulphide or carbonyl sulphide.

6. A method according to one of the preceding claims, **characterised in that** the heating of the gas takes place by means of heat exchangers which can be serviced, in the form of shell-and-tube heat exchangers.

7. A method according to one of the preceding claims, **characterised in that** the acidic reaction products are separated out from the gas stream with a sorbent.

8. A method according to one of the preceding claims, **characterised in that** the combined catalytic oxidation and hydrolysis and the separation of the acidic reaction products is carried out in at least one fixed-bed reactor.

9. A method according to one of the preceding claims, **characterised in that** the fixed-bed reactor has at least one zone for the decomposition of organo-silicon compounds, in which the heated gas is brought into contact with a first metal oxide catalyst.

10. A method according to the preceding claim, **characterised in that** the first metal oxide catalyst consists of oxides of the elements aluminium, titanium, silicon and also of acid-activated bentonites or of mixtures of the aforesaid compounds or substantially contains them.

11. A method according to one of the preceding claims, **characterised in that** the fixed-bed reactor has at least one zone for the decomposition of aromatic, halogenated hydrocarbons and also sulphur-containing compounds, in which the heated gas is brought into contact with a second metal oxide catalyst.

12. A method according to the preceding claim, **characterised in that** the second metal oxide catalyst consists of oxides of the elements vanadium, titanium, iron, manganese, chromium or of mixtures of the aforesaid compounds or substantially contains them.

13. A method according to the preceding claim, **characterised in that** the fixed-bed reactor has at least one zone for sorption of the acidic reaction products, in which the heated gas is brought into contact with a basic metal oxide.

14. A method according to the preceding claim, **characterised in that** the basic metal oxide is aluminium oxide.

15. A method according to the preceding claim, **characterised in that** the basic metal oxide contains further basic additives.

16. A method according to the preceding claim, **characterised in that** the basic additives are sodium oxide and/or calcium oxide.

17. A method according to one of the preceding claims, **characterised in that** the combined oxidation and hydrolysis takes place in the presence of water and atmospheric oxygen, with the gas moisture content in the gas supplying the water for the hydrolysis and the oxygen being contained in the gas as an infiltrated-air content.

18. A method according to one of the preceding claims, **characterised in that** in addition to carbon dioxide and water, hydrogen chloride and hydrogen fluoride and also sulphur dioxide are formed as acidic reaction products.

19. A method according to one of the preceding claims, **characterised in that** the gas is heated to temperatures of 200 to 400°C, in particular from 250 to 350°C.

20. A method according to one of the preceding claims, **characterised in that** the purified gas is supplied to an electricity generator.

21. A method according to the preceding claim, **characterised in that** exhaust gas is formed in the electricity generator during the combustion process, the heat of which can be used for heating the gas.

22. A method according to one of the preceding claims, **characterised in that** the heating of the gas to be purified takes place by the heat produced upon the combustion of a partial stream of the output gas and/or of the purified gas.

23. A method according to one of the preceding claims, **characterised in that** the gas is filtered of dust following the separation of the acidic reaction products.

24. A method according to one of the preceding claims, **characterised in that** the methane-containing gas is landfill gas or sewage gas.

25. A method according to one of the preceding claims, **characterised in that** the purified gas is supplied to an electricity generator, preferably a fuel cell, a turbine or an engine.

26. A device for the catalytic purification of biogenic or anthropogenic methane-containing gases, containing at least one heat exchanger for heating the biogenic or anthropogenic methane-containing gas and at least one fixed-bed reactor with at least three zones, with a first metal oxide catalyst for the decomposition of organo-silicon compounds being arranged in the first zone, a second metal oxide catalyst for the decomposition of aromatic and halogenated hydrocarbons and sulphur-containing compounds in the second zone and a basic metal oxide for the sorption of acidic reaction products which have been formed in the first two zones in the third zone.

27. A device according to Claim 26, **characterised in that** the heat exchanger is a shell-and-tube heat exchanger.

28. A device according to one of Claims 26 or 27, **characterised in that** the gas is supplied to the heat exchanger via a compressor.

29. A device according to one of Claims 26 to 28, **characterised in that** the device has an electricity generator into which the purified gas is fed.

30. A device according to Claim 29, **characterised in that** the electricity generator is thermally coupled to the heat exchanger, so that the heat developed upon the combustion in the electricity generator is coupled into the heat exchanger.

31. A device according to one of Claims 26 to 30, **characterised in that** the electricity generator is a fuel cell, a turbine or a gas engine or consists of combinations of the aforementioned electricity generators.

32. A device according to one of Claims 26 to 31, **characterised in that** at least one dust filter is arranged following the fixed-bed reactor.

33. A device according to one of Claims 26 to 32 for carrying out the method according to one of Claims 1 to 25.

## Revendications

1. Procédé d'épuration catalytique de gaz biogéniques ou anthropogéniques contenant du méthane, dans lequel le gaz biogénique ou anthropogénique contenant du méthane est chauffé à des températures dans l'intervalle de 200 à 450 °C, le gaz chauffé est soumis à une oxydation catalytique et à une hydrolyse combinées, lors desquelles tous les composés mineurs contenus dans le gaz sont décomposés en dioxyde de carbone, en eau et en produits de réaction acides, et après quoi les produits de réaction acides sont séparés.

2. Procédé selon la revendication 1, **caractérisé en ce que** les composés mineurs appartiennent au groupe des hydrocarbures halogénés et aromatiques, des composés organo-siliciques, ainsi que des composés soufrés.

3. Procédé selon la revendication 2, **caractérisé en ce que** les hydrocarbures halogénés et aromatiques sont choisis parmi le groupe consistant en le tétrachloréthène, le trichlorotrifluoréthane, le benzène et l'éthylbenzène.

4. Procédé selon la revendication 2, **caractérisé en ce que** le composé organo-silicique est l'hexaméthyldisiloxane.

5. Procédé selon la revendication 2, **caractérisé en ce que** le composé soufré est de l'hydrogène sulfuré ou du sulfure de carbonyle.

6. Procédé selon l'une quelconque des revendications précédentes, **caractérisé en ce que** le chauffage du gaz s'effectue au moyen de dispositifs de transfert de chaleur pouvant être révisés, sous la forme de dispositifs de transfert de chaleur à faisceaux de tubes.

7. Procédé selon l'une quelconque des revendications précédentes, **caractérisé en ce que** les produits de réaction acides sont séparés du flux de gaz par un sorbant.

8. Procédé selon l'une quelconque des revendications précédentes, **caractérisé en ce que** l'oxydation catalytique et l'hydrolyse combinées et la séparation des produits de réaction acides sont effectuées dans au moins un réacteur à lit fixe.

9. Procédé selon l'une quelconque des revendications précédentes, **caractérisé en ce que** le réacteur à lit fixe comporte au moins une zone pour la décomposition des composés organo-siliciques, dans laquelle le gaz chauffé est amené en contact avec un premier catalyseur à oxyde métallique.

10. Procédé selon la revendication précédente, **caractérisé en ce que** le premier catalyseur à oxyde métallique consiste en des oxydes des éléments aluminium, titane, silicium, ainsi qu'en bentonites activées en acidité, ou en mélanges des composés cités, ou contiennent ces derniers de façon prépondérante.

11. Procédé selon l'une quelconque des revendications précédentes, **caractérisé en ce que** le réacteur à lit fixe comporte au moins une zone pour la décomposition d'hydrocarbures aromatiques, halogénés, ainsi que de composés soufrés, dans laquelle le gaz chauffé est amené en contact avec un deuxième catalyseur à oxyde métallique.

12. Procédé selon l'une quelconque des revendications précédentes, **caractérisé en ce que** le deuxième catalyseur à oxyde métallique consiste en des oxydes des éléments vanadium, titane, fer, manganèse, chrome ou en mélanges des composés cités, ou contiennent ces derniers de façon prépondérante.

13. Procédé selon l'une quelconque des revendications précédentes, **caractérisé en ce que** le réacteur à lit fixe comporte au moins une zone pour la sorption des produits de réaction acides, dans laquelle le gaz chauffé est amené en contact avec un oxyde métallique basique.

14. Procédé selon la revendication précédente, **caractérisé en ce que** l'oxyde métallique basique est de l'oxyde d'aluminium.

15. Procédé selon la revendication précédente, **caractérisé en ce que** l'oxyde métallique basique contient d'autres additifs basiques.

16. Procédé selon la revendication précédente, **caractérisé en ce que** les additifs basiques sont de l'oxyde de sodium et/ou de l'oxyde de calcium.

17. Procédé selon l'une quelconque des revendications précédentes, **caractérisé en ce que** l'oxydation et l'hydrolyse combinées s'effectuent en présence d'eau et d'oxygène de l'air, l'humidité du gaz dans le gaz livrant l'eau pour l'hydrolyse et l'oxygène étant contenu dans le gaz comme part d'entrée d'air.

18. Procédé selon l'une quelconque des revendications précédentes, **caractérisé en ce qu'à** côté du dioxyde de carbone et de l'eau, du gaz chlorhydrique et du dioxyde de soufre sont formés comme produits de réaction acides.

19. Procédé selon l'une quelconque des revendications précédentes, **caractérisé en ce que** le gaz est chauffé à des températures de 200 à 400 °C, en particulier de 250 à 350 °C.

20. Procédé selon l'une quelconque des revendications précédentes, **caractérisé en ce que** le gaz épuré est acheminé à un générateur de courant électrique.

21. Procédé selon l'une quelconque des revendications précédentes, **caractérisé en ce que** dans le générateur de courant électrique, lors de la combustion, un gaz brûlé est formé dont la chaleur peut être utilisée à réchauffer le gaz.

22. Procédé selon l'une quelconque des revendications précédentes, **caractérisé en ce que** le chauffage du gaz à épurer s'effectue par la chaleur formée lors de la combustion d'un flux partiel du gaz initial et/ou du gaz épuré.

23. Procédé selon l'une quelconque des revendications précédentes, **caractérisé en ce qu'**un filtrage des poussières du gaz fait suite à la séparation des produits de réaction acides.

24. Procédé selon l'une quelconque des revendications précédentes, **caractérisé en ce que** le gaz contenant du méthane est un gaz de décharge de déchets ou un gaz de curage.

25. Procédé selon l'une quelconque des revendications précédentes, **caractérisé en ce que** le gaz épuré est acheminé à un générateur de courant électrique, de préférence une pile à combustible, une turbine ou un moteur.

26. Dispositif d'épuration catalytique de gaz biogéniques ou anthropogéniques contenant du méthane, comprenant au moins un dispositif de transfert de chaleur pour le chauffage du gaz biogénique ou anthropogénique contenant du méthane et au moins un réacteur à lit fixe avec au moins trois zones, un premier catalyseur à oxyde métallique étant disposé dans la première zone pour la décomposition de composés organo-siliciques, un deuxième catalyseur à oxyde métallique étant disposé dans la deuxième zone pour la décomposition d'hydrocarbures aromatiques et halogénés et de composés soufrés et un oxyde métallique basique étant disposé dans la troisième zone pour la sorption de produits de réaction acides qui auront été formés dans les deux premières zones.

27. Dispositif selon la revendication 26, **caractérisé en ce que** le dispositif de transfert de chaleur est un dispositif de transfert de chaleur à faisceau de tubes.

28. Dispositif selon l'une quelconque des revendications 26 ou 27, **caractérisé en ce que** le gaz est acheminé au dispositif de transfert de chaleur par l'intermédiaire d'un compresseur.

29. Dispositif selon l'une quelconque des revendications 26 à 28, **caractérisé en ce que** le dispositif comporte un générateur de courant électrique dans lequel le gaz épuré est introduit.

30. Dispositif selon la revendication 29, **caractérisé en ce que** le générateur de courant électrique est couplé thermiquement avec le dispositif de transfert de chaleur, de telle sorte que la chaleur perdue lors de la combustion dans le générateur de courant est couplée dans le dispositif de transfert de chaleur.

31. Dispositif selon l'une quelconque des revendications 26 à 30, **caractérisé en ce que** le générateur de courant électrique est une pile à combustible, une turbine ou un moteur à gaz ou bien une combinaison des générateurs de courant électrique susmentionnés.

32. Dispositif selon l'une quelconque des revendications 26 à 31, **caractérisé en ce qu'**à la sortie du réacteur à lit fixe est disposé au moins un filtre à poussières.

33. Dispositif selon l'une quelconque des revendications 26 à 32 pour l'exécution du procédé selon l'une quelconque des revendications 1 à 25.
